# EUROPEAN PATENT APPLICATION

(11) **EP 1 550 964 A1**
(43) Date of publication of application: **06.07.2005**
(21) Application number: 03079199.0
(22) Date of filing: 30.12.2003
(51) Int. Cl.: G06F 17/60

(54) **A method and an appratus of forecasting demand for a product in a managed supply chain**

(71) Applicant: SAP AG, 69190 Walldorf (DE)
(72) Inventor: Moessner, Ralph, 76327 Pfinztal (DE)
(74) Representative: Prins, Adrianus Willem, Mr. Ir.

(57) **Abstract**

The invention relates to a method of forecasting demand for a product in a managed supply chain. The method comprises the steps of:
determining a forecast profile including a forecast model and a forecast parameter to be assigned to a set of data forming the basis of the forecast, wherein the determining step includes the steps of:
   performing a forecast test on the set of data to identify the significance of a forecast model in the set of data,
   determining iteratively the value of a forecast parameter, wherein the forecast parameter iteratively determined is determined by the outcome of the performing step, and the method includes the further step of:
      automatically assigning the determined forecast profile to the set of data.

## Description

### Technical Field

The invention relates to a method of forecasting demand for a product in a managed supply chain and a demand forecasting apparatus for forecasting demand for a product in a managed supply chain.

### Background to the Invention and Prior Art

Forecasting predicts future demand for a product based on historical and judgemental data. Forecasts can be created in various ways including statistical methods, causal analysis, human judgement or a combination of these ways. Conventional forecasting techniques are also known having a degree of automation, that is, parts of the forecasting procedure is carried out automatically, for example, by a computer.
It has been found, however, that when a partially automated forecast process is performed on historical data, which includes a time varying historical time series, manual intervention is required in order to forecast. In particular, manual intervention is required in order to select the most suitable forecast models and/or parameters for such a forecast model.

It is an object of the present invention to address those problems encountered in conventional demand forecasting. In particular, it is an object of the present invention to reduce the need for manual intervention in forecasting demand.

### Summary of the Invention

According to a first aspect of the invention, there is provided a method of forecasting demand for a object in a managed supply chain, comprising the steps of:
determining a forecast profile including a forecast model and a forecast parameter to be assigned to a set of data forming the basis of the forecast, wherein the determining step includes the steps of:
   performing a forecast test on the set of data to identify the significance of a forecast model in the set of data,
   determining iteratively the value of a forecast parameter, wherein the forecast parameter iteratively determined is determined by the outcome of the performing step, and the method includes the further step of:
      assigning the determined forecast profile to the set of data.
In this way, the optimal model is automatically searched for and selected. Further all parameters are identified without requiring manual intervention.

According to a second aspect of the present invention, there is provided a demand forecasting apparatus for forecasting demand for a object in a managed supply chain, wherein the demand forecasting apparatus is operatively associated with a user interface for receiving input of a forecast selection, the demand forecasting apparatus comprising: a storage medium having recorded therein processor readable code processable to forecast demand for an object in a managed supply chain, the code comprising determining code processable to determine a forecast profile including a forecast model and a forecast parameter to be assigned to a set of data forming the basis of the forecast, the determining code includes a performing code processable to perform a forecast test on the set of data to identify the significance of a forecast model in the set of data, and determining iteratively code processable to determine iteratively a value of a forecast parameter, wherein the forecast parameter iteratively determined is determined by the performing code, wherein the code further comprises assigning code processable to assign the determined forecast profile to the set of data.

According to a third aspect of the present invention, there is provided a user terminal comprising means operable to perform any of the methods of the first aspect of the present invention.

According to a fourth aspect of the present invention, there is provided a program storage device readable by a processing apparatus, the device embodying a program of instructions executable by the processor to perform the steps of the methods of the first aspect of the present invention.

### Brief description of the drawings

In order that the invention may be more fully understood embodiments thereof will now be described by way of example only, with reference to the figures in which:
Figure 1a shows a constant forecast model;
Figure 1b shows a trend forecast model;
Figure 1c shows a seasonal forecast model;
Figure 1d shows a seasonal trend forecast model;
Figure 2 shows a flow chart showing a demand planning in accordance with an embodiment of the present invention; and
Figure 3 shows an architecture incorporating an embodiment of the present invention.

### Description of the Preferred embodiments

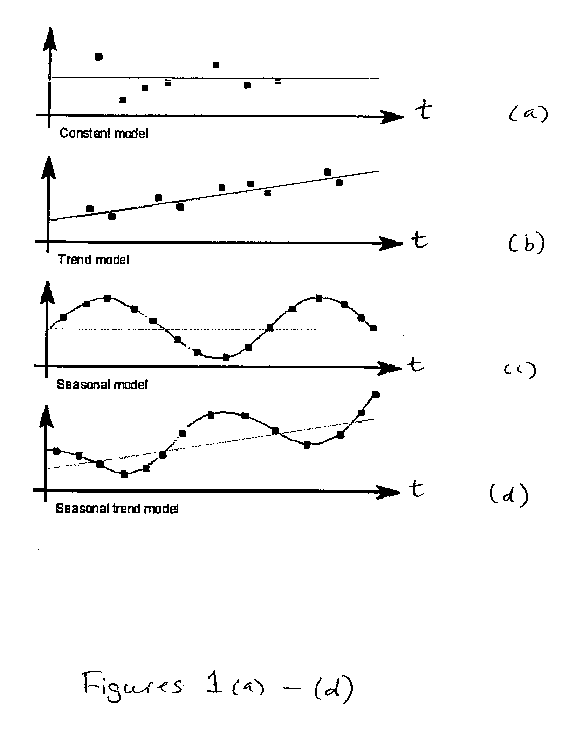

The data used in forecasting models typically includes consumption values, when a series of consumption values is analysed, it typically reveals a pattern or patterns. These patterns can then be matched up with a forecast model. Given below is a non-exhaustive list of forecast models to which the present invention has application. It will be understood that the present invention has further application to other forecast models, some of which are mentioned later in the text.
Examples of forecast models include:
a constant model is one where consumption values vary very little from a table mean value,
a trend model is one where consumption values fall or rise substantially constantly over a relatively long period of time with only occasional deviations, a seasonal model is one where a periodically recurring peak or low values differ significantly from a stable mean value,
a seasonal trend model is one where there is a substantially continual increase or decrease in the mean value, and
a copy of actual data model.
In a copy of actual data model no forecast is executed, the historical data updated from the operative application is copied, which can then be edited. If no pattern can be detected in a series of historical consumption values, for example, by performing for example a white noise test as described below, the time series is regarded as irregular. Figures 1a to 1d show constant, trend, seasonal and seasonal trend forecast models, respectively, wherein consumption values are plotted against time. Mathematically speaking, the seasonal trend is the most complex of those models shown. For example, for the seasonal trend model, the forecast value comprises a basic value term G from the constant model, a trend term T from the trend model and a seasonal term S from the seasonal model.
A forecast profile includes a forecast model, as described above, and forecast parameters which take a value and which are applied to the model.
Typically each model includes certain forecast parameters to which a value is to be assigned in order for the model to provide an optimum forecast.
Model initialization is the process of determining the necessary model parameters, for example, the basic value, the trend value and the seasonal indices, for the selected forecast model. The forecast parameters may also include smoothing parameters, such as alpha, beta and gamma parameters. It is desirable when a model is used that forecasts a value of one period based on the forecast value for the period directly before it. An initial value is input to start the forecast. Table 1 show which model parameters are associated with each forecast model.

**Table 1**

| Model | Model parameters |
|---|---|
| Constant model | Basic value |
| Trend model | Basic value, trend value |
| Seasonal model | Basic value, seasonal indices |
| Seasonal Trend model | Basic value, trend value, seasonal indices |

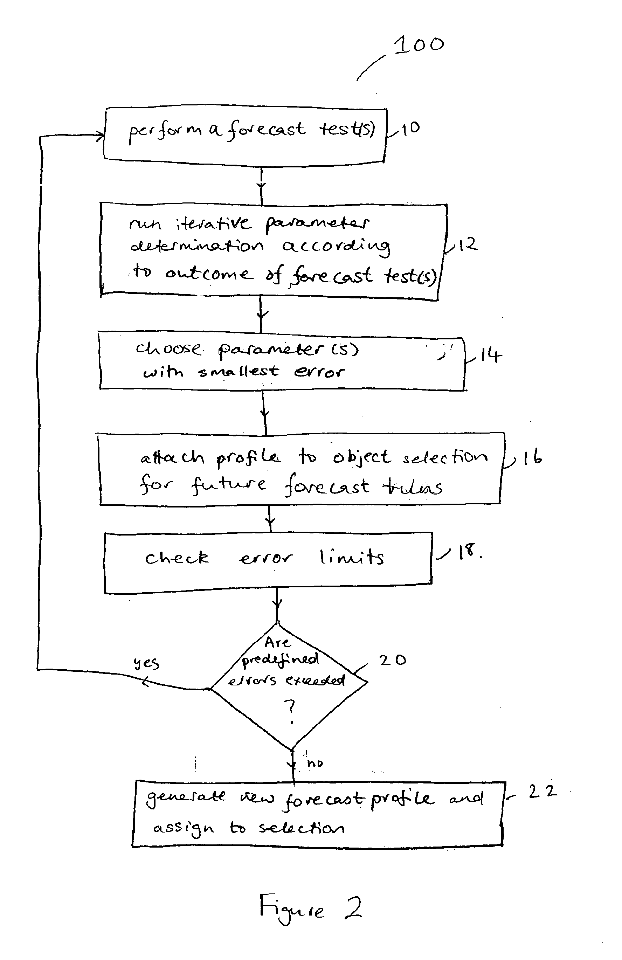

Figure 2 shows a flow chart showing a demand planning in accordance with an embodiment of the present invention. As can be seen, a process 100 is shown including the steps of: performing a forecast test or tests (step 10). The test is carried out on the set of data forming the basis of the analysis. The user may make a selection with respect to a certain objects or objects for which the forecast is to be made. However, this is not essential. The invention has application to batch processing and may be applied to either an entire data range or portions thereof. The forecast test includes a test to identify the significance of a forecast model or models in the set of data. For example, forecast tests may include tests to identify whether the set of data exhibits seasonal, trend, croston or white noise model associated characteristics. The optimum forecast model is identified in this way according to which test the set of data returns the greatest significance indication. A test or a plurality of tests may be carried out. However, typically a seasonal and/or trend test is carried out first. Depending on the result of these tests, the system decides to use a constant, trend a seasonal or a trend seasonal model etc with those parameters specified by each model respectively. It is noted that the croston model is known in the art, and functions by identifying which percentage of the historical data has value zero. It is good for modelling sporadic behaviour.

The croston model is typically applied if the percentage of zeros is above a certain predetermined threshold value. The white noise test is performed in order to detect if the time series is irregular. If the set of data tests positive for the white noise text, the constant model is generally applied. After the forecast test(s) has been applied, an iterative parameter determination is run according to the outcome of the forecast test(s) (step 12). That is the parameter iteration is performed for the forecast models for which a significance was identified in the test. A positive test for a particular test indicates that the set of data fits the model. The significance indicates that the set of data fits the model to a sufficient degree. For example, if the forecast tests establish that a seasonal model fits the set of data, only those parameters associated with the seasonal model are determined in the iterative determination. This results in a more automatic procedure to find the optimum forecast model and parameter combination for certain set of data, which may represent for example a certain characteristic value combination. Further, the model selection is processed quicker than in conventional forecast methods because of the reduced number of iteration steps required subsequent to carrying out the forecast tests. This represents a more efficient use of processing power in the system. The parameter iteration method typically varies the parameters alpha, beta and gamma between the values 0.1 and 0.5 with incremental steps of 0.1. The step width and the starting and end values may be customised by the user. If the user does not choose this option, the default values of the iteration for parameters, for example, alpha, beta and gamma, are chosen. Further, in order to increase the flexibility of the forecasting with respect to conventional methods, these parameters are in included in the forecast profile.
The forecast result which is estimated to be the optimum, is the one which results in the lowest forecast error. Accordingly, the system chooses the model and parameter set with the smallest error (step 14). The forecast profile defines the error to be used. This may be set by the system or by a user. For example, the following error determinations may be chosen: mean absolute deviation (MAD), mean squared error (MSE), root of mean squared error (RMSE), mean percentage error (MPE), means absolute percentage error (MAPE), error total or any further user defined error measure.
If the result of the forecast tests is negative with respect to significance, the system will apply the constant model to the data, or to a forecast test which provided a positive significance results with respect to a related set of data. Typically the forecast tests, in particular, the seasonal and trend tests are defined in the system, however, a user is able to define that a negative trend is to be treaded as no trend and a constant model will be chosen. Thus, the user may define how the results of the tests will influence the model selected.
Once the parameters have been determined, the forecast profile is attached to the set of data which may represent an object selection for future forecast runs (step 16). Conventionally, there is no automatic procedure of assigning forecast profiles to selections. According to this embodiment of the present invention, the functionality that during a batch forecasting run with an iterative determination of parameters, the system dynamically creates a forecast profile with parameters of the forecast strategy chosen. After that the system assigns these generated profiles to the selection. This feature may be activated by a flag in the activity for batch jobs. Having assigned the profile, the system checks error limits (step 18) If predefined errors are exceeded (step 20), the system sends an alert, and if necessary, a forecast model selection is carried out again, also further iterative determination of parameters is carried out. Further if error measure of a batch forecast exceed the error limits defined in the diagnosis group of the forecast profile, an alert will be sent. If the new result does not exceed the error limits, a new forecast profile is generated and assigned to the selection and no alert is sent (step 22). As mentioned, the forecast resulting in a minimum forecast error is chosen as best result. The optimal parameter value or set of parameter values, depending on the model, is attached to the selection of forecasted objects, represented by the set of data. This ensures that in a future forecast run, the optimal parameters can be chosen directly. When such a parameter set is attached to an object selection the forecast is carried out with this parameter or parameter set. Afterwards, the forecast result is analysed using predefined error limits which are part of the attached parameter set. If the forecast exceeds the predefined error limits the automatic model selection is started again, step 20 returns to step 10, which searches for better parameter sets This ensures an automatic process with minimum user interference and optimal forecast results.

According to an embodiment of the present invention, there is provided a method of forecasting demand for a object in a managed supply chain, comprising the steps of: determining a forecast profile including a forecast model and a forecast parameter to be assigned to a set of data forming the basis of the forecast, wherein the determining step includes the steps of:
performing a forecast test on the set of data to identify the significance of a forecast model in the set of data, determining iteratively the value of a forecast parameter, wherein the forecast parameter iteratively determined is determined by the outcome of the performing step, and the method includes the further step of: assigning the determined forecast profile to the set of data. In this way, user interference is minimalised whilst optimum forecast parameters are found with an increase in efficient use of the system's processing power. In a further embodiment, the assigning step is carried out automatically. In this way, the profile is assigned without requiring user input.
In a further embodiment, the set of data represents a user selection with respect to an object or group of objects. In this way, the user can select which object or objects are to be forecast for. Alternatively, a data set may include all objects. In a further embodiment, the performing step includes the step of:
performing a plurality of forecast tests to identify the significance of a plurality of forecast models, respectively. Typically, the seasonal test and the trend test are carried out. In this way, it can be identified which of a plurality of tests,
the set of data tests positively for with respect to significance, thus increasing the chances of identifying the optimum model. In a further embodiment, the values of a plurality of forecast parameters are determined iteratively. Depending on the model identified, one or more parameters will be determined. By determining the plurality of parameters optimal use of the model is made. A further embodiment includes the step of: determining a forecast error for the forecast parameter(s). A further embodiment includes the step of: choosing the forecast parameter for the forecast profile on the basis of the forecast error determination. In this way, the optimum value for each parameter is obtained. In a further embodiment, the assigning step is carried out for future forecast runs. In this way, data processing is saved, since it is not necessary to carry out a complete model selection for future forecast runs, as the results of the present run are assigned to a future run. A further embodiment includes the step of: determining the forecast errors in a future forecast run and determining whether a predetermined error limit is exceeded. In this way, rather than carrying out a model selection and parameter determination for every future run, if a future run includes a set of data which does fits a present profile, no new model selection is carried out. Thus, it is only carried out where necessary, further saving on processing capacity.

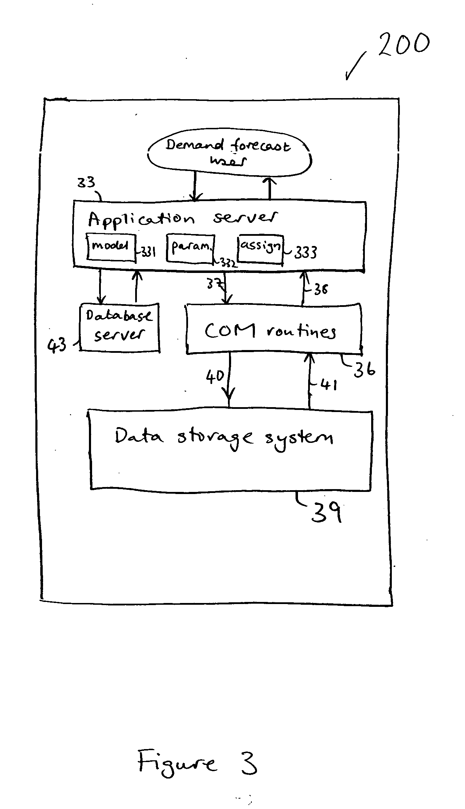

Figure 3 shows an architecture incorporating an embodiment of the present invention. A system 200 is shown on which the process described may be implemented, in particular the data flow and data processing steps initiated by the demand forecasting apparatus and method of an embodiment of the present invention are shown. The system 200 includes a demand forecast user 30 which is a graphic user interface (GUI), with which a user interacts. Typically, the user makes a request or inputs data 31 to an application server 33. The input for example, may include a selection of a set of data already stored or a set of data on which a forecast is to be based. In particular, the user may inputs a first initial value and changed values, if and when desired.

Having provided data and/a request, the user receives an output in the form of a delivery of data 32 from the application server 33. The application server 33 runs the application logic which carries out the demand forecasting. The system 200 further typically includes a programming system 36 for running Common Object Model (COM) routines 36 which define a network programming system. The COM routines receive a request or an input of data 37 from the application server. Furthermore, the COM routines deliver data 38 to the application server 33. The function of the COM routines is to carry out data transformation and data calculation. The COM routines are further in association with a data storage system 39, such as an object oriented database, for example, LiveCache. The COM routines send a request or an input of data 40 to the data storage system. The data storage system 39 delivers data 41 to the COM routines.
Returning to the application server 33, in one embodiment of the present invention, a demand forecasting apparatus is provided for forecasting demand for a object in a managed supply chain, wherein the demand forecasting apparatus is operatively associated with a user interface for receiving input of a forecast selection, the demand forecasting apparatus comprising: a storage medium having recorded therein processor readable code processable to forecast demand for an object in a managed supply chain, the code comprising determining code processable to determine a forecast profile including a forecast model and a forecast parameter to be assigned to a set of data forming the basis of the forecast, the determining code includes a performing code processable to perform a forecast test on the set of data to identify the significance of a forecast model in the set of data, and determining iteratively code processable to determine iteratively a value of a forecast parameter, wherein the forecast parameter iteratively determined is determined by the performing code, wherein the code further comprises assigning code processable to assign the determined forecast profile to the set of data.

Typically the application logic is written in Advanced Business Application Programming (ABAP), a programming language developed by the applicants for application development. However, the invention is not limited in this respect and other programming languages are also suitable depending on the particular application the present invention is incorporated into. The application server comprises a plurality of applications 331, 332, 333 adapted to carry out data processing. The first application 331 is typically adapted to perform the model selection described above. The second application 332 is adapted to carry out the iterative determination of the parameter values as described above. The third application is adapted to carry out the assignment of the forecast profile to the set of data. The application server 33 also includes means to perform the request processing which is input by the demand forecasting user 30. At the request processing level the user request is processed without processing the actual data. The applications 331, 332, 333 are typically adapted to carry out the data processing.

It will be understood that depending on the other applications comprised in the system 200, the system will include a plurality of GUIs and applications. Although, only one GUI and application are shown in Figure 3 other GUIs and applications may also be comprised in the system.

In the demand forecasting, the internal logic for dealing with transactional data incorporates the following: the transactional data are stored in a data storage system 39, for example an object oriented data storage system, such as LiveCache (LC). The transactional data are typically represented with three technical characteristics for profile, table, and row.

The invention as described can be implemented in digital electronic circuitry, or in computer hardware, firmware, software, or in combination thereof. An apparatus according to the present invention can be implemented in a computer program product tangibly embodied in a machine readable storage device for execution by a programmable processor; and method steps of the invention can be performed by a programmable processor executing a program of instructions to perform functions of the invention by operating on input data and generating output. The invention can be implemented in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language can be a compiled or interpreted language. Suitable processors include, by way of example, both general and special purpose microprocessors. Typically, a processor will receive instructions and data from a read-only memory and/or a random access memory. Typically, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of nonvolatile memory, including by way of example, semiconductor memory devices, such as EEPROM, and flash memory devices; magnetic disks such as internal hard disks and removable disks; magneto-optical disks; and CD-ROM disks. Any of the foregoing can be supplemented by, or incorporated in ASICs (application specific integrated circuits).

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical user interface through which computer programs interact with users.
Whilst specific embodiments of the invention have been described above, it will be appreciated that the invention may be practiced otherwise than as described. In the embodiments described certain products, characteristics and other parameters are referred to. The present invention is not limited to these particular products etc, and these are given by way of example only. The present invention has broad application to the demand planning of any product including configurable products. The description is not intended to limit the invention. For example, the order steps be performed of the present invention is not limited to that order prescribed in the claims.

## Claims

1. A method of forecasting demand for a object in a managed supply chain, comprising the steps of:
determining a forecast profile including a forecast model and a forecast parameter to be assigned to a set of data forming the basis of the forecast, wherein the determining step includes the steps of:
performing a forecast test on the set of data to identify the significance of a forecast model in the set of data,
determining iteratively the value of a forecast parameter, wherein the forecast parameter iteratively determined is determined by the outcome of the performing step, and the method includes the further step of:
assigning the determined forecast profile to the set of data.

2. A method according to claim 1, wherein the assigning step is carried out automatically.

3. A method according to any of the preceding claims, wherein the set of data represents a user selection with respect to an object or group of objects.

4. A method according to any of the preceding claims, wherein the performing step includes the step of:
performing a plurality of forecast tests to identify the significance of a plurality of forecast models, respectively.

5. A method according to any of the preceding claims, wherein the values of a plurality of forecast parameters are determined iteratively.

6. A method according to any of the preceding claims, wherein the forecast parameter(s) include a smoothing parameter(s).

7. A method according to any of the preceding claims, including the further step of:
determining a forecast error for the forecast parameter(s).

8. A method according to claim 7, including the further step of:
choosing the forecast parameter for the forecast profile on the basis of the forecast error determination.

9. A method according to any of the preceding claims, wherein the assigning step is carried out for future forecast runs.

10. A method according to claim 9, including the further step of:
determining the forecast errors in a future forecast run and
determining whether a predetermined error limit is exceeded.

11. A demand forecasting apparatus for forecasting demand for a object in a managed supply chain, wherein the demand forecasting apparatus is operatively associated with a user interface for receiving input of a forecast selection, the demand forecasting apparatus comprising: a storage medium having recorded therein processor readable code processable to forecast demand for an object in a managed supply chain, the code comprising determining code processable to determine a forecast profile including a forecast model and a forecast parameter to be assigned to a set of data forming the basis of the forecast,
the determining code includes a performing code processable to perform a forecast test on the set of data to identify the significance of a forecast model in the set of data, and determining iteratively code processable to determine iteratively a value of a forecast parameter, wherein the forecast parameter iteratively determined is determined by the performing code, wherein the code further comprises assigning code processable to assign the determined forecast profile to the set of data.

12. A user terminal comprising means operable to perform the method of any of claims 1-10.

13. A program storage device readable by a processing apparatus, said device embodying a program of instructions executable by the processor to perform the steps of any one of claims 1-10.
